(19) **Europäisches Patentamt**

**European Patent Office**

**Office européen des brevets**

(11) **EP 0 756 171 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(51) Int Cl.7: **G01N 27/12**

(21) Anmeldenummer: **96109460.4**

(22) Anmeldetag: **13.06.1996**

(54) **Schaltungsanordnung zur Luftgütemessung**

Circuit for air quality measurement

Circuit pour la mesure de la qualité de l'air

(84) Benannte Vertragsstaaten:
**DE ES FR GB IT**

(30) Priorität: **27.07.1995 DE 19527426**

(43) Veröffentlichungstag der Anmeldung:
**29.01.1997 Patentblatt 1997/05**

(73) Patentinhaber: **ROBERT BOSCH GMBH**
**70442 Stuttgart (DE)**

(72) Erfinder:
  • **Weigold, Thomas, Dipl.-Ing.**
  **76547 Sinzheim (DE)**

  • **Holland, Heiner, Dipl.-Phys.**
  **79104 Freiburg (DE)**

(56) Entgegenhaltungen:
  **DE-A- 3 825 036**

  • **SOVIET INVENTIONS ILLUSTRATED, Ch Sektion, Woche 8422, 11. July 1984 DERWENT PUBLICATIONS LTD., London; & SU-A-1036 767 (ELCTRO THERMIC APP)**

**Beschreibung**

Die Erfindung betrifft eine Schaltungsanordnung zur Luftgütemessung nach dem Oberbegriff des Anspruchs 1.

Stand der Technik

Schaltungsanordnungen zur Luftgütemessung sind bekannt. Diese weisen wenigstens ein Sensorelement auf, das einen Widerstand enthält, der seinen Widerstandswert in Abhängigkeit von einer bestimmten Schadstoffkonzentration in einer Luftzusammensetzung ändert. Insbesondere ist es bekannt, derartige Schaltungsanordnungen bei der Messung eines Kohlenmonoxid- oder Stickoxid-Anteils in einem Luftgemisch zu messen. Aufgrund einer sich ändernden Luftzusammensetzung stellt das Sensorelement ein Ausgangssignal bereit, das mittels einer Auswerteschaltung beispielsweise dazu verwendet werden kann, eine bestimmte Reaktion auf die sich ändernde Luftzusammensetzung auszulösen. Bei Kraftfahrzeugen ist hierzu bekannt, aufgrund einer sich ändernden, insbesondere einer steigenden Konzentration von Kohlenmonoxid oder Stickoxid die Lüftung des Kraftfahrzeugs von Frischluftbetrieb auf Umluftbetrieb umzuschalten, um zu verhindern, daß eine schadstoffbelastete Außenluft in den Innenraum des Kraftfahrzeugs gelangt.

Aus der DE-OS 38 25 036 ist beispielsweise eine Vorrichtung bekannt, die eine derartige Schaltungsanordnung aufweist. Bei den bekannten Schaltungsanordnungen ist nachteilig, daß der Grundwiderstand der verwendeten Sensorelemente chargenweise und/oder über die Lebensdauer der Sensorelemente starken Schwankungen unterliegen kann, die beispielsweise von einigen $k\Omega$ bis größer als $100\,k\Omega$ erreichen können, so daß es zu Fehlinterpretationen des tatsächlichen Konzentrationsgehaltes der Luftzusammensetzung und damit zu einer Bereitstellung eines fehlerhaften Ausgangssignals kommen kann. Darüber hinaus ist nachteilig, daß während des bestimmungsgemäßen Gebrauchs der Sensorelemente deren Sensoroberfläche verunreinigt wird und diese hierdurch niederohmig wird. Dies hat das Ansteigen eines durch das Sensorelement fließenden Meßstroms zur Folge, der eine Beeinträchtigung der Auswerteschaltung des Ausgangssignals des Sensorelements herbeiführen kann.

Vorteile der Erfindung

Die erfindungsgemäße Schaltungsanordnung mit den im Anspruch 1 genannten Merkmalen bietet demgegenüber den Vorteil, daß diese unabhängig von dem Grundwiderstand des Sensorelementes eine konstante Empfindlichkeit aufweist. Dadurch, daß die Auswerteschaltung eine Logarithmierschaltung aufweist, ist es vorteilhaft möglich, die logarithmische Widerstands/Konzentrationskennlinie des Sensorelementes ebenfalls logarithmisch auszuwerten und so eine dem Verhalten der Sensorelemente angepaßte logarithmische Kennlinie des Ausgangssignals zu erhalten.

In bevorzugter Ausgestaltung der Schaltungsanordnung ist vorgesehen, daß der Meßstrom durch die Sensorelemente einstellbar und vorzugsweise auf einen Maximalwert begrenzbar ist. Hierdurch wird sehr vorteilhaft erreicht, daß bei einer Schaltungsanordnung mit zwei Sensorelementen, die jeweils eine unterschiedliche Konzentration der Luftzusammensetzung detektieren, die Meßströme durch die Sensorelemente einstellbar sind. Weiterhin ist vorteilhaft möglich, eine Anpassung der Meßströme für den Fall vorzunehmen, daß die beiden Sensorelemente der Schaltungsanordnung einen sehr weit voneinander abweichenden Grundwiderstand aufweisen. Über einen vorzugsweise vorgesehenen Spannungsteiler kann die Einstellung beziehungsweise Anpassung der Meßströme in einfacher Weise realisiert werden. Darüber hinaus ist in bevorzugter Ausgestaltung der Schaltungsanordnung vorgesehen, daß der Meßstrom auf einen Maximalwert begrenzt wird, wobei vorzugsweise ein Strombegrenzungswiderstand vorgesehen ist.

In weiterer vorteilhafter Ausgestaltung der Schaltungsanordnung ist vorgesehen, daß eine relative Gewichtung der von den beiden in der Schaltungsanordnung vorgesehenen Sensorelemente gelieferten Sensorsignale möglich wird. Hierdurch können die Empfindlichkeiten der die Stickoxid-Konzentration oder des die Kohlenmonoxid-Konzentration messenden Sensorelemente aufeinander abgestimmt werden, so daß das insgesamt von der Schaltungsanordnung bereitgestellte Ausgangssignal stärker auf eine Änderung der Stickoxid-Konzentration oder eine Änderung der Kohlenmonoxid-Konzentration reagiert.

Darüber hinaus ist in einer weiteren bevorzugten Ausgestaltung der Schaltungsanordnung vorgesehen, daß eine Querempfindlichkeitskompensation des die Stickoxid- Konzentration detektierenden Sensorelementes vorgesehen ist. Hierdurch kann dessen relativ stark ausgeprägte Querempfindlichkeit gegenüber einer Kohlenmonoxid-Konzentration mittels der Auswerteschaltung sehr vorteilhaft kompensiert werden.

Weitere vorteilhafte Ausgestaltungen der Erfindung ergeben sich aus den in den Unteransprüchen genannten Merkmalen.

Zeichnungen

Die Erfindung wird nachfolgend in Ausführungsbeispielen anhand der zugehörigen Zeichnungen näher erläutert. Es zeigen:

Figur 1    die erfindungsgemäße Schaltungsanordnung in einer ersten Ausführungsvariante;

Figur 2    eine Schaltungsanordnung der Auswerteschaltung;

Figur 3    die erfindungsgemäße Schaltungsanordnung in einer zweiten Ausführungsvariante und

Figur 4    die erfindungsgemäße Schaltungsanordnung in einer dritten Ausführungsvariante.

Beschreibung der Ausführungsbeispiele

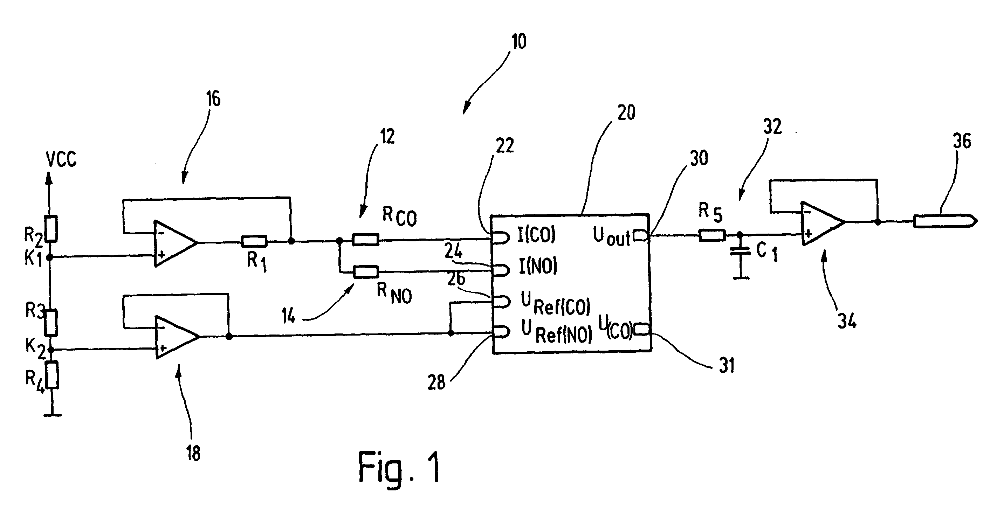

In der Figur 1 ist eine allgemein mit 10 bezeichnete Schaltungsanordnung zum Erfassen einer Luftzusammensetzung, insbesondere der vorhandenen Konzentration von Kohlenmonoxid und Stickoxid, dargestellt. Die Schaltungsanordnung 10 weist ein erstes Sensorelement 12 zur Detektion einer Kohlenmonoxid-Konzentration auf. Das Sensorelement 12 ist hier durch einen Widerstand $R_{CO}$ dargestellt. Weiterhin ist ein zweites Sensorelement 14 vorgesehen, das der Detektion einer Stickoxid-Konzentration dient. Das Sensorelement 14 ist hier durch einen Widerstand $R_{NO}$ dargestellt. Die Widerstandswerte der Widerstände $R_{CO}$ beziehungsweise $R_{NO}$ sind konzentrationsabhängig von der Kohlenmonoxid-Konzentration beziehungsweise der Stickoxid-Konzentration. Die Widerstände $R_{CO}$ und $R_{NO}$ sind über einen Widerstand R1 mit dem Ausgang eines ersten Operationsverstärker 16 verbunden. Der Operationsverstärker 16 ist als nichtinvertierender Verstärker geschaltet. Der nicht invertierende Eingang des Operationsverstärkers 16 ist mit einem Knotenpunkt K1 verbunden, der zwischen zwei in Reihe geschalteten Widerständen R2 und R3 liegt. Zu der Reihenschaltung der Widerstände R2 und R3 liegt ein weiterer Widerstand R4 in Reihe. Ein zwischen den Widerständen R3 und R4 liegender Knoten K2 ist mit dem nicht invertierenden Eingang eines zweiten Operationsverstärkers 18 verbunden. Der zweite Operationsverstärker 18 ist ebenfalls als nichtinvertierender Verstärker geschaltet.

Die Schaltungsanordnung 10 weist ferner eine Auswerteschaltung 20 auf. Ein erster Eingang 22 der Auswerteschaltung 20 ist mit dem Widerstand $R_{CO}$, ein zweiter Eingang 24 mit dem Widerstand $R_{NO}$ verbunden. Weiterhin ist ein dritter Eingang 26 sowie ein vierter Eingang 28 der Auswerteschaltung 20 mit dem Ausgang des Operationsverstärkers 18 verbunden. Ein erster Ausgang 30 der Auswerteschaltung 20 ist mit einem aus einem Widerstand R5 sowie einer Kapazität C1 bestehenden Tiefpaß 32 verbunden. Der Tiefpaß 32 ist mit dem nicht invertierenden Eingang eines dritten Operationsverstärkers 34 verbunden, der ebenfalls als nichtinvertierender Verstärker geschaltet ist. Der Ausgang des Operationsverstärkers 34 ist mit einem Ausgangsanschluß 36 der gesamten Schaltungsanordnung 10 verbunden. Die Auswerteschaltung 20 besitzt ferner einen zweiten Ausgang 31.

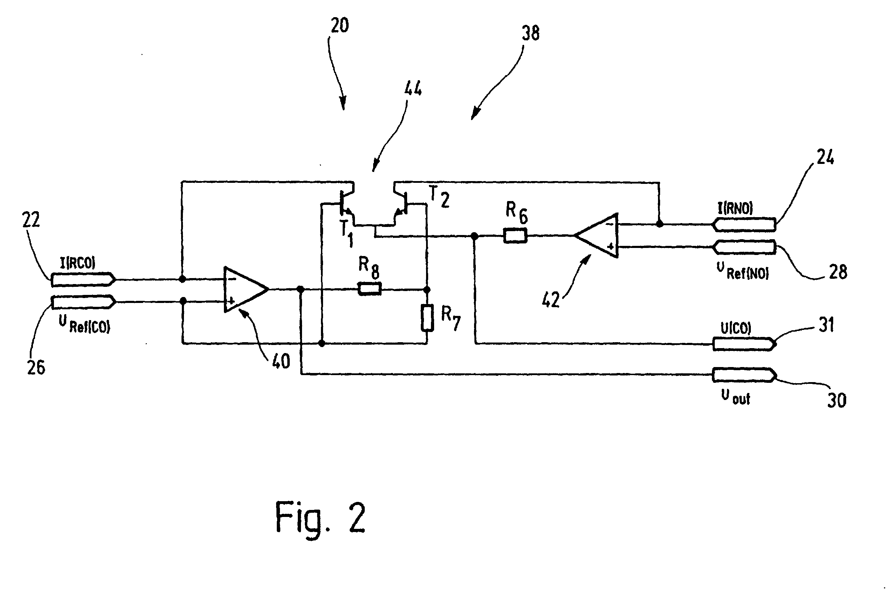

Die Auswerteschaltung 20 ist, wie Figur 2 näher zeigt, als Logarithmierschaltung 38 ausgebildet. Die Logarithmierschaltung 38 besitzt den in der Figur 2 gezeigten Schaltungsaufbau, wobei jeder beliebige andere Schaltungsaufbau geeignet ist, der eine Logarithmierfunktion darstellen kann. Die Eingänge 22 und 26 sind mit einem Operationsverstärker 40 und die Eingänge 24 und 28 mit einem Operationsverstärker 42 verbunden. Die mit den Widerständen $R_{CO}$ beziehungsweise $R_{NO}$ (Figur 1) verbundenen Eingänge 22 und 24 sind hierbei jeweils auf den invertierenden Eingang der Operationsverstärker 40 beziehungsweise 42 geschaltet, während die Eingänge 26 und 28 auf den nicht invertierenden Eingang der Operationsverstärker 40 und 42 geschaltet sind. Weiterhin ist eine Differenzverstärkerschaltung 44 von Transistoren T1 und T2 vorgesehen, wobei die Transistoren T1 und T2 als npn- Transistoren ausgebildet sind. Der Kollektor des Transistors T1 ist mit dem Eingang 22, die Basis des Transistors T1 mit dem Eingang 26 und der Emitter des Transistors T1 über einen Widerstand R6 mit dem Ausgang des Operationsverstärkers 42 einerseits und andererseits mit dem Ausgang 31 der Auswerteschaltung 20 verbunden. Der Kollektor des Transistors T2 ist mit dem Eingang 24, die Basis des Transistors T2 über einen Widerstand R7 mit dem Eingang 26 und der Emitter des Transistors T2 ebenfalls über den Widerstand R6 mit dem Ausgang des Operationsverstärkers 42 und dem Ausgang 31 verbunden. Der Ausgang des Operationsverstärkers 40 ist mit dem Ausgang 30 der Auswerteschaltung 20 und über einen Widerstand R8 mit der Basis des Transistors T2 verbunden.

Die in den Figuren 1 und 2 dargestellte Schaltungsanordnung 10 übt folgende Funktion aus:

Die Reihenschaltung der Widerstände R2, R3 und R4 bildet einen Spannungsteiler für eine zwischen den Außenanschlüssen der Reihenschaltung anliegende Versorgungsspannung. Entsprechend der tatsächlich vorhandenen Konzentration des Kohlenmonoxids beziehungsweise des Stickoxids stellt sich ein bestimmter Widerstandswert der Widerstände $R_{CO}$ beziehungsweise $R_{NO}$ ein. Hierdurch stellt sich ein Meßstrom $I_{CO}$ über den Widerstand $R_{CO}$ ein, der am Eingang 22 der Auswerteschaltung 20 anliegt. Über den Widerstand $R_{NO}$ fließt ein weiterer Meßstrom $I_{NO}$, der am Eingang 24 der Auswerteschaltung 20 anliegt. Der Meßstrom des Sensorelementes 12 beziehungsweise des Sensorelementes 14 ergibt sich aus dem Quotienten der jeweiligen Sensorspannung und des konzentrationsabhängigen Sensorwiderstandes $R_{CO}$ beziehungsweise $R_{NO}$. Am Sensorelement 12 fällt hierbei die Sensorspannug $U_{S(CO)}$ sowie am Sensorelement 14 die Sensorspannung $U_{S(NO)}$ ab. Die Sensorspannung $U_{S(CO)}$ ergibt sich hierbei aus der Differenz der Ausgangsspannung des Operationsverstärkers 16 und der am Eingang 26 anliegenden Referenzspannung für das Sensorelement 12 $U_{Ref(CO)}$. Die Sensorspannung $U_{S(NO)}$ für das Sensorelement 14 ergibt sich aus der Differenz der Ausgangsspannung des Operationsverstärkers 16 und der am Eingang 28 anliegenden Referenzspannung für das Sensorelement 14 $U_{R(NO)}$. Da die Referenzspannungen $U_{R(CO)}$ und $U_{R(NO)}$ gleich groß sind, ergibt sich, daß an beiden Sensorelementen 12 beziehungsweise 14 die gleiche Sensorspannung $U_{S(CO)}$ beziehungsweise $U_{S(NO)}$ abfällt. Somit ergibt sich, daß die sich an den Eingängen 22 beziehungsweise 24 einstellenden Meßströme $I_{CO}$ beziehungsweise $I_{NO}$ sich mit der Änderung der Kohlenmonoxid-Konzentration beziehungsweise der Stickoxid-Konzentration verändern.

Die Größe der Meßströme ist über den Spannungsteiler der Widerstand R2, R3, R4 einstellbar. Darüber hinaus kann durch Auswahl der Widerstände des Spannungsteilers R2, R3, R4 eine Anpassung von sehr weit voneinander abweichenden Grundwiderständen $R_{CO}$ beziehungsweise $R_{NO}$ der Sensorelemente 12 beziehungsweise 14 erfolgen.

Der zwischen dem Ausgang des Operationsverstärkers 16 und den Sensorelementen 12 beziehungsweise 14 geschaltete Widerstand R1 dient als Strombegrenzungswiderstand. Diese Begrenzung ist unter anderem erforderlich, wenn die Widerstand $R_{CO}$ beziehungsweise $R_{NO}$ der Sensorelemente 12 beziehungsweise 14 zum Beispiel aufgrund durch Oberflächenverunreinigungen sehr niederohmig werden. Hierdurch käme es zu einem Ansteigen der Meßströme $I_{CO}$ beziehungsweise $I_{NO}$. Die Ausgangsspannung des Operationsverstärkers 16 kann je nach verwendetem Operationsverstärker einen bestimmten Spannungswert $U_{max}$ nicht überschreiten.

Überschreitet die Summe der Sensorströme $I_{CO}$ und $I_{NO}$ einen bestimmten Wert, kann die Ausgangsspannung des Operationsverstärkers 16 nicht mehr weiter ansteigen. Hierdurch sinkt die Sensorspannung $U_{S(CO)}$ beziehungsweise $U_{S(NO)}$, und der Sensorstrom wird auf den maximalen Wert $I_{max}$, der sich aus der Differenz der Spannung $U_{max}$ und der Referenzspannung $U_{R(CO)}$ dividiert durch den Widerstand R1 ergibt, begrenzt.

Die von der Logharithmierschaltung 38 gebildete Auswerteschaltung 20 liefert an ihren Ausgang 30 ein Ausgangssignal $U_{out}$. Hierbei werden von der Logarithmierschaltung 38 die an den Eingängen 22 bis 28 anliegenden Meßströme $I_{CO}$ und $I_{NO}$ beziehungsweise Referenzspannungen $U_{R(CO)}$ und $U_{R(NO)}$ verarbeitet. Das Ausgangsspannungssignal ergibt sich hierbei nach der Formel:

$$U_{out}=U_{Ref(CO)}-K_R \cdot U_T \cdot \ln\frac{R_{NO}}{R_{CO}}$$

mit:

$$K_R=\frac{R_7+R_8}{R_7}$$

$$U_T \approx 26mV \qquad (\text{bei } 20\ {}^\circ C)$$

Das Ausgangssignal $U_{out}$ besitzt entsprechend der Logarithmierschaltung 38 eine dem logarithmischen Verhalten der Widerstandswerte der Widerstände $R_{CO}$ beziehungsweise $R_{NO}$ angepaßte logarithmische Kennlinie. Es ergibt sich somit eine konstante Empfindlichkeit der Auswerteschaltung 20 über weite Bereiche des Grundwiderstandes der Widerstände $R_{CO}$ beziehungsweise $R_{NO}$.

Das Ausgangssignal $U_{out}$ wird über den Tiefpaß 32 und den Operationsverstärker 34 geführt. Mittels des Tiefpasses 32 wird das Spannungssignal $U_{out}$ gefiltert und anschließend über den Operationsverstärker 34 verstärkt, so daß am Ausgangsanschluß 36 ein Ausgangssignal der Schaltungsanordnung 10 anliegt, das beispielsweise zum Betätigen einer Schalteinrichtung zum Umschalten von Frischluft auf Umluft in Kraftfahrzeugen genutzt werden kann. Dies stellt selbstverständlich lediglich eine beispielhafte Anwendung dar, da das am Ausgangsanschluß 36 anliegende Ausgangssignal auch für andere Zwecke und bei anderen Anwendungen eingesetzt werden kann.

Die hier als Operationsverstärker 16, 18 beziehungsweise 34 dargestellten Spannungsquellen lassen sich ebenfalls durch andere geeignete Bauelemente realisiern.

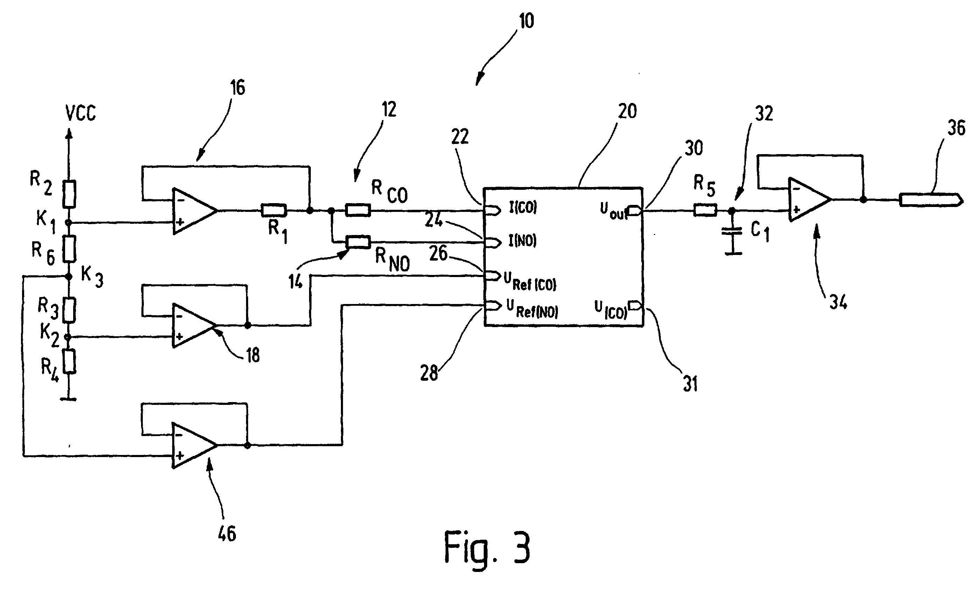

In der Figur 3 ist eine weitere Ausführungsvariante der Schaltungsanordnung 10 gezeigt, wobei gleiche Teile wie in den Figuren 1 und 2 mit gleichen Bezugszeichen versehen und nicht nochmals erläutert sind. Zu den Widerständen R2, R3 und R4 ist ein weiterer Widerstand R6 in Reihe geschaltet. Ein zwischen den Widerständen R3 und R6 liegender Knoten K3 ist mit dem nicht invertierenden Eingang eines weiteren Operationsverstärkers 46 verbunden. Der Operationsverstärker 46 ist als nichtinvertierender Verstärker geschaltet, dessen Ausgang mit dem Eingang 28 der Auswerteschaltung 20 verbunden ist. Der Ausgang des Operationsverstärkers 18 ist - im Gegensatz zur Schaltungsanordnung in Figur 1 - lediglich mit dem Eingang 26 der Auswerteschaltung 20 verbunden.

Durch die zusätzliche Anordnung des Operationsverstärkers 46 wird erreicht, daß die Referenzspannungen $U_{Ref(CO)}$ beziehungsweise $U_{Ref(NO)}$ für die Sensorelemente 12 beziehungsweise 14 über den Spannungsteiler der Widerstände R2, R6, R3 und R4 unterschiedlich eingestellt werden können. Hierdurch ist eine relative Gewichtung der von den Sensorelementen 12 beziehungsweise 14 gelieferten Sensorsignale, das heißt, der Meßströme $I_{CO}$ beziehungsweise $I_{NO}$ möglich. Durch unterschiedliche Referenzspannungen $U_{Ref(CO)}$ beziehungsweise $U_{Ref(NO)}$ ergeben sich unterschiedliche Sensorspannungen $U_{S(CO)}$ beziehungsweise $U_{S(NO)}$ an den Widerstand $R_{CO}$ beziehungsweise $R_{NO}$ und damit unterschiedliche Empfindlichkeiten der Sensorelemente 12 beziehungsweise 14.

Gemäß der in Figur 3 gezeigten Darstellung der Schaltungsanordnung 10 ist die Empfindlichkeit des Sensorelementes 12 größer als die Empfindlichkeit des Sensorelementes 14. Durch Austausch der an den Eingängen 26 beziehungsweise 28 der Auswerteschaltung 20 anliegenden Referenzspannungen $U_{Ref(CO)}$ beziehungsweise $U_{Ref(NO)}$ kann die Empfindlichkeit der Sensorelemente 12 beziehungsweise 14 genau entgegengesetzt festgelegt werden.

Am Ausgang 30 der Schaltungsanordnung 20, die wiederum die in Figur 2 gezeigte Logarithmierschaltung 38 enthält, liegt ein Ausgangsspannungssignal $U_{out}$ nach folgender Gleichung an:

$$U_{out} = U_{Ref(CO)} - K_R \cdot U_T \cdot \ln \frac{R_{NO} \cdot U_{S(CO)}}{R_{CO} \cdot U_{S(NO)}}$$

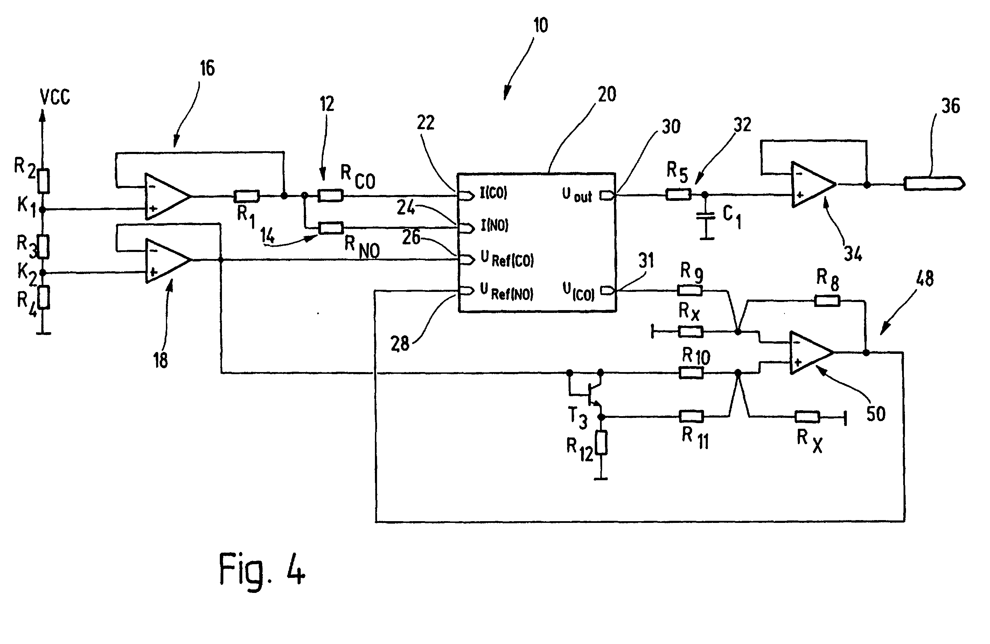

Anhand der in Figur 4 dargestellten Schaltungsanordnung 10 wird eine weitere vorteilhafte Ausführungsvariante erläutert. Gleiche Teile wie in den vorhergehenden Figuren sind wiederum mit gleichen Bezugszeichen versehen und nicht nochmals erläutert.

Der Ausgang 31 der Auswerteschaltung 20 ist hier über eine Kompensationsschaltung 48 mit dem Eingang 28 der Auswerteschaltung 20 verbunden. Die Kompensationsschaltung 48 enthält einen Operationsverstärker 50, dessen invertierender Eingang über einen Widerstand R9 mit dem Ausgang 31 der Auswerteschaltung 20 verbunden ist. Der nicht invertierende Eingang des Operationsverstärkers 50 ist über einen Widerstand R10 mit dem Ausgang des Operationsverstärkers 18 verbunden. Der Ausgang des Operationsverstärkers 18 ist weiterhin mit der Basis und dem Kollektor eines Transistors T3 verbunden. Der Emitter des Transistors T3 ist über einen Widerstand R11 mit dem nicht invertierenden Eingang des Operationsverstärkers 50 verbunden. Weiterhin sind hier mit R12 und lediglich als Rx bezeichnete Widerstände vorgesehen, die der Ansteuerung des Operationsverstärkers 50 dienen.

Durch die in der Figur 4 dargestellte Kompensationsschaltung 48 wird erreicht, daß die am Ausgang 31 der Auswerteschaltung 20 anliegende, der über das Sensorelement 12 gemessenen Kohlenmonoxid-Konzentration entsprechende Spannung $U_{CO}$ einer Auswertung unterzogen werden kann. Der Transistor T3 stellt hierbei eine Temperaturkompensation für den in der Logarithmierschaltung 38 vorgesehenen Transistor T1 dar. Am Ausgang des Operationsverstärkers 50 liegt somit ein von der Kohlenmonoxid-Konzentration abhängiges Spannungssignal an, das als Referenzspannung $U_{R(NO)}$ für das Sensorelement 14, also das Stickoxid-Sensorelement, dient. Somit ist eine von der Kohlendioxid-Konzentration abhängige relative Gewichtung der beiden von den Sensorelementen 12 beziehungsweise 14 gelieferten Sensorsignale möglich.

Bei der in Figur 4 gezeigten Schaltungsanordnung 10 liefert die Auswerteschaltung 20 an ihrem Ausgang 30 ein Ausgangsspannungssignal $U_{out}$ nach folgender Gleichung:

$$U_{out} = U_{Ref(CO)} - K_R \cdot U_T \cdot \ln \frac{R_{NO}}{R_{CO}} + K_R \cdot U_T \cdot \ln \left( I + \frac{U_T \cdot v}{U_{S(CO)}} \cdot \ln \frac{U_{S(CO)}}{R_{CO} \cdot I_{R12}} \right)$$

mit:

$$v = \frac{R_X}{R_9}$$

$$R_9 = R_{11} \; und \; R_x = R_{10}$$

Insgesamt ist es mit den in den Figuren 1 bis 4 gezeigten Schaltungsanordnungen 10 möglich, eine von einer Kohlenmonoxid-Konzentration oder Stickoxid-Konzentration abhängige Widerstandsänderung der Widerstände $R_{CO}$ beziehungsweise $R_{NO}$ zu erfassen und die von den Sensorelementen 12 beziehungsweise 14 gelieferten Sensorsignale miteinander zu verknüpfen. Hierbei weist die Auswerteschaltung 20 eine von den Grundwiderständen der Sensorelemente 12 beziehungsweise 14 unabhängige konstante Empfindlichkeit auf. Weiterhin ist der durch die Sensorelemente 12 beziehungsweise 14 fließende Meßstrom einstellbar und auf einen Maximalwert begrenzbar. Darüber hinaus kann eine relative Gewichtung der von den Sensorelementen 12 beziehungsweise 14 gelieferten Sensorsignale zueinander eingestellt werden, wobei weiterhin eine relativ stark ausgeprägte Querempfindlichkeit des Stickoxid-Sensorelementes 14 gegenüber einer Kohlenmonoxid-Konzentration kompensiert werden kann. Die Schaltungsanordnung 10 ist somit trotz ihres einfachen Aufbaus den gegebenen Bedingungen anpaßbar.


**Patentansprüche**

1.   Schaltungsanordnung zur Luftgütemessung mit wenigstens einem Sensorelement, das ein in Abhängigkeit einer Änderung einer Luftzusammensetzung sich änderndes Messsignal bereitstellt, und mit einer eine Logarithmierschaltung aufweisenden Auswerteschaltung für das Messsignal, **dadurch gekennzeichnet, dass** ein einen ersten Gasbestandteil, insbesondere eine Kohlenmonoxidkonzentration, detektierender Widerstand ($R_{CO}$), und ein einen zweiten Gasbestandteil, insbesondere eine Stickoxidkonzentration, detektierender Widerstand ($R_{NO}$) vorgesehen sind, deren Widerstandswerte sich in Abhängigkeit von der Konzentration der zu detektierenden Gasbestandteile ändern, die Widerstände ($R_{CO}$, $R_{NO}$) mit Eingängen (22, 24) der Logarithmierschaltung (20) verbunden sind, Eingänge (26, 28) der Logarithmierschaltung mit gleich großen Referenzspannungen ($U_{R(CO)}$, $U_{R(NO)}$) beaufschlagbar sind und die Logarithmierschaltung (20) durch Verknüpfung von über die Widerstände ($R_{CO}$) beziehungsweise ($R_{NO}$) fließenden Messströmen ($I_{CO}$) beziehungsweise ($I_{NO}$) mit der Referenzspannung ($U_{R(CO)}$) beziehungsweise ($U_{R(NO)}$) bei einer Änderung des Widerstandswertes des Widerstandes ($R_{CO}$) und/oder des Widerstandes ($R_{NO}$) ein eine logarithmische Kennlinie besitzendes Ausgangssignal ($U_{out}$) bereitstellt.

2.   Schaltungsanordnung nach Anspruch 1, **dadurch gekennzeichnet, daß** die Widerstände ($R_{CO}$,$R_{NO}$) und die Referenzspannungsquelle ($U_{Ref(CO)}$,$U_{Ref(NO)}$) über einen Spannungsteiler (R2, R3, R4, R6) mit einer Versorgungsspannung verbunden sind.

3.   Schaltungsanordnung nach einem der vorhergehenden Ansprüche, **dadurch gekennzeichnet, daß** den Widerständen ($R_{CO}$,$R_{NO}$) ein Strombegrenzungswiderstand (R1) zugeordnet ist.

4.   Schaltungsanordnung nach einem der vorhergehenden Ansprüche, **dadurch gekennzeichnet, daß** ein Ausgang (31) der Auswerteschaltung (20), an dem ein der Kohlenmonoxid-Konzentration entsprechendes Signal ($U_{CO}$) anliegt, über eine Kompensationsschaltung (48) die Referenzspannung ($U_{Ref(NO)}$) für den Widerstand ($R_{NO}$) liefert.


**Claims**

1.   Circuit arrangement for air quality measurement comprising at least one sensor element which provides a measuring signal varying as a function of a change in an air composition, and comprising an evaluation circuit, having a logarithmic circuit, for the measuring signal, **characterized in that** there are provided a resistor ($R_{CO}$) detecting a first gas constituent, in particular a carbon monoxide concentration, and a resistor ($R_{NO}$) detecting a second gas constituent, in particular a nitrogen oxide concentration, whose resistance values change as a function of the concentration of the gas constituents to be detected, the resistors ($R_{CO}$, $R_{NO}$) are connected to inputs (22, 24) of the logarithmic circuit (20), it being possible to apply reference voltages ($U_{R(CO)}$, $U_{R(NO)}$ of equal magnitude to inputs (26, 28) of the logarithmic circuit, and the logarithmic circuit (20) provides an output signal ($U_{out}$) having a logarithmic characteristic by combining measured currents ($I_{CO}$) and ($I_{NO}$), respectively flowing via the resistors ($R_{CO}$) and ($R_{NO}$), with the reference voltage ($U_{R(CO)}$) and ($U_{R(NO)}$), in the event of a change in the resistance value of the resistor ($R_{CO}$) and/or the resistor ($R_{NO}$).

2.   Circuit arrangement according to Claim 1, **characterized in that** the resistors ($R_{CO}$, $R_{NO}$) and the reference voltage source ($U_{Ref(CO)}$, $U_{Ref(NO)}$) are connected to a supply voltage via a voltage divider (R2, R3, R4, R6).

3.   Circuit arrangement according to one of the preceding claims, **characterized in that** the resistors ($R_{CO}$, $R_{NO}$) are assigned a current-limiting resistor (R1).

4. Circuit arrangement according to one of the preceding claims, **characterized in that** an output (31) of the evaluation circuit (20) at which a signal ($U_{CO}$) corresponding to the carbon monoxide concentration is present applies the reference voltage ($U_{Ref(NO)}$) for the resistor ($R_{NO}$) via a compensation circuit (48).

**Revendications**

1. Circuit pour mesurer la qualité de l'air comportant au moins un capteur et fournissant un signal de mesure variable en fonction de la variation de la composition de l'air et un circuit d'exploitation ayant un circuit logarithmique pour le signal de mesure,

   **caractérisé par**

   une première résistance $R_{CO}$ prédétectant une première composante du gaz notamment une concentration de monoxyde de carbone, et une seconde résistance $R_{NO}$ détectant une seconde composante du gaz notamment et une concentration d'oxydes d'azote, résistances dont les valeurs changent en fonction de la concentration des composants de gaz à détecter, ces résistances ($R_{CO}$, $R_{NO}$) étant reliées aux entrées (22, 24) du circuit logarithmique (20), avec des entrées (26, 28) du circuit logarithmique recevant des tensions de référence de même amplitude ($U_{ref(co)}$, $U_{ref(no)}$), le circuit logarithmique (20) fournissant par la combinaison des courants de mesure ($I_{CO}$, $I_{NO}$) traversant les résistances ($R_{CO}$ $R_{NO}$) avec la tension de référence ($U_{ref(co)}$, $U_{ref(No)}$) un signal de sortie ($U_{sort}$) ayant une caractéristique logarithmique en cas de variation de la valeur de la résistance ($R_{CO}$) et/ou de la résistance ($R_{NO}$).

2. Circuit selon la revendication 1,

   **caractérisé en ce que**

   les résistances ($R_{CO}$ $R_{NO}$) et les sources de tensions de référence ($U_{ref(co)}$, $U_{ref(no)}$) sont reliées par un diviseur de tension de tension (R2, R3, R4, R6) à une tension d'alimentation.

3. Circuit selon l'une des revendications précédentes,

   **caractérisé par**

   une résistance de limitation de courant ($R_1$) associée aux résistances ($R_{CO}$, $R_{NO}$).

4. Circuit selon l'une des revendications précédentes.

   **caractérisé en ce qu'**

   une sortie (31) du circuit d'exploitation (20) recevant un signal ($U_{co}$) correspondant à la concentration de monoxyde de carbone, fournit pour la résistance ($R_{No}$) la tension de référence ($U_{ref(No)}$) au moyen d'un circuit de compensation (48).

Fig. 1

Fig. 2

Fig. 3

Fig. 4

11